# EUROPÄISCHE PATENTANMELDUNG

(11) **EP 2 341 373 A2**
(43) Veröffentlichungstag der Anmeldung: **06.07.2011**
(21) Anmeldenummer: 10197032.5
(22) Anmeldetag: 27.12.2010
(51) Int. Cl.: G01V 8/00, G01V 13/00, G06K 9/00

(54) **Vorrichtung und Verfahren zur Skalierung bodengestützter kleinräumiger Messungen auf großräumige Skalen unter Verwendung der Erdfernerkundung**

(30) Priorität: 31.12.2009 DE 102009060952
(71) Anmelder: Jena-Optronik GmbH, 07745 Jena (DE)
(72) Erfinder: Fritsch, Holger, 07749 Jena (DE)
(74) Vertreter: Freitag, Joachim

(57) **Zusammenfassung**

Die Erfindung betrifft eine Vorrichtung und ein Verfahren zur Kopplung von kleinräumigen bodennahen Messungen unter Verwendung von Messtürmen mit hochauflösenden Fernerkundungsdaten und Skalierung auf globale Skalen unter Verwendung von global abtastenden satellitengestützten Fernerkundungsinstrumenten. Die Aufgabe, eine neue Möglichkeit der Übertragung von Messergebnissen kleinräumiger bodennaher Messverfahren auf die größere Skala der global abdeckenden Fernerkundungsvorrichtungen zu finden, ohne dass die globale Schwadweite verringert oder die Kameraparameter extrem erhöht werden müssen, wird erfindungsgemäß gelöst, indem zusätzlich zu einer global abtastenden Kamera (12) eine hochauflösende satellitengestützte Kamera (11) vorhanden ist, die ein gegenüber der globalen Kamera (12) wesentlich kleineres Blickfeld (111) zur Abbildung des 2 bis 10fachen Einflussgebietes eines Messturms und eine Auflösung im Bereich von 10 cm bis 100 m aufweist, die hochauflösende Kamera (11) derart agil angeordnet ist, dass ihr Blickfeld (111) innerhalb des Blickwinkels (121) der globalen Kamera (12) verschiebbar ist und das Blickfeld (121) der globalen Kamera (12) überstreichen kann, und hochauflösende Kamera (11) und globale Kamera (12) während eines Orbits (41; 42) Abbildungen unterschiedlicher geometrischer Auflösung in gleich spezifizierten Spektralbereichen (21, 22) erfassen, wobei die globale Kamera (12) mindestens drei Detektorsegmente aufweist, mit denen während eines Orbits (41; 42) von einem betrachteten Objektpunkt mindestens drei Aufnahmen mit unterschiedlicher Winkelgeometrie erfassbar sind.

## Beschreibung

Die Erfindung betrifft eine Vorrichtung und ein Verfahren zur Kopplung von kleinräumigen bodennahen Messungen unter Verwendung von Messtürmen mit hochauflösenden Fernerkundungsdaten und Skalierung auf globale Skalen unter Verwendung von global abtastenden satellitengestützten Fernerkundungsinstrumenten mit mindestens einer global abtastenden Kamera, die mittels einer satellitengestützten Plattform auf einem Orbit eine optische Abtastung der Erdoberfläche realisiert.

Im Rahmen der flugzeug- und satellitengestützten optischen Beobachtung werden in zunehmenden Maße Beobachtungen vordefinierter Orte gefordert, an denen bodengestützte Messungen durchgeführt werden. Letztere repräsentieren in der Regel kleinräumige Skalen (ca. 1 m ... 10 km).
Unter bodengestützten Messungen werden nachfolgend Messungen in Bodennähe (bodennahe Messungen) verstanden, die in der Regel in einem Abstand zwischen 0 m und 50 m über dem Boden gewonnen. In Einzelfällen erhöht sich dieser Abstand auf bis zu 500 m, wenn hohe Messtürme zur Verfügung stehen. Mit Hilfe der flugzeug- und satellitengestützten optischen Beobachtungen sollen die auf solchen kleinräumigen Skalen gewonnenen Aussagen auf eine größere Skala (10 km ... global) übertragen werden.

So ist es beispielsweise bekannt, dass an verschiedenen repräsentativen Orten der Energie- und Stoffaustausch zwischen der Landoberfläche und der Atmosphäre mittels Eddy-Kovarianzmessung und klassischer meteorologischer Messverfahren unter Verwendung von Messtürmen erfasst werden kann (AUBINET M. et al.: Estimates of the annual net carbon and water exchange of forests. The EUROFLUX methodology. In: Advances in ecological research 30 (2000) 113-175).
Diese Daten repräsentieren in Abhängigkeit der Turbulenz der Atmosphäre und der Turmhöhe die Verhältnisse in der luvseitigen Umgebung von etwa 50 m bis 10 km (T. Foken: Angewandte Meteorologie, Mikrometeorologische Methoden, Springer Verlag Berlin Heidelberg 2006, 326; ISBN 978-3-540-38202-7). Somit ist mit Hilfe der Daten der Messtürme keine direkte Beschreibung der globalen Verhältnisse möglich.

Ohne Beschränkung der Allgemeinheit soll unter Energieaustausch beispielsweise
- der Austausch fühlbarer (sensibler) Wärme,
- die Strahlungsflüsse sowie
- der Austausch latenter Wärme
und unter Stoffaustausch beispielsweise der Austausch von
- Kohlendioxid oder
- Methan

### verstanden werden.

Mittels optischer Kameras kann zwar eine globale Abdeckung der Erdoberfläche durch den Abtastbereich eines wiederholt mit Versatz überfliegenden optischen Instruments erreicht werden, jedoch kann - unabhängig von der Auflösung - keine direkte Messung des Energie- und Stoffaustausches durchgeführt werden.

Bekannte optische Fernerkundungsinstrumente (Vorrichtungen unter Verwendung von optischen Kameras) weisen bezüglich der Übertragbarkeit von kleinräumigen Messungen der Messtürme (luvseitiges Einflussgebiet 50 m bis 10 km und ca. 10⁴ m² bis 25·10⁶ m²) auf eine größere Skala der global abtastenden Fernerkundungsvorrichtungen mit großer Schwadweite quer zur Flugrichtung (ACT - across track), die häufig mehr als 1.000 km der Erdoberfläche mit einem Schwad abdecken, erhebliche Nachteile auf.

Kameras, die die Erdoberfläche mit großer ACT-Schwadweite abdecken (nachfolgend: globale Kameras), verwenden momentan Bodenauflösungen in der Größenordnung von etwa 1 km (AVHRR, SeaWifs, Modis u.a.; in: G. REES: The remote sensing data book, Cambridge University Press, Cambridge 1999, ISBN 052148040 X). Dabei verschlechtert sich prinzipbedingt die genannte Auflösung zu den Schwadenden hin auf etwa 2 km bis 5 km. Erschwerend kommen Ungenauigkeiten bzgl. der Lagekenntnis des einzelnen Bodenpixels hinzu. In Summe lässt sich mit solchen globalen Kameras das Einflussgebiet der Turmmessungen - die so genannte Tower-Footprint-Function - nicht auflösen. Ohne eine solche höhere Auflösung (≤100 m) kommt es aufgrund der stets vorhandenen Inhomogenitäten des Geländes innerhalb eines Bodenpixels zwangsläufig zu einer fehlerhaften Übertragung der turmgestützten Messwerte auf die Fernerkundungsdaten. Erschwerend wirkt zusätzlich der Umstand, dass innerhalb des Blickfeldes (FOV - Field of View) einer globalen Kamera jeder Bodenpunkt unter einer anderen Winkelgeometrie (Sonne - Bodenpunkt - Kamera) aufgenommen wird. Durch die Winkelabhängigkeit der Reflexion an der Erdoberfläche (Bidirectional Reflectance Distribution Function - BRDF) und der spektralen Abhängigkeit der BRDF selbst, ergeben sich unterschiedliche Abhängigkeiten zwischen einer kleinräumig erfassten physikalischen Messgröße und beliebigen Punkten im FOV der globalen Kamera. Daraus ergibt sich ein großes Fehlerpotential, das eine Skalierung hoher Qualität verhindert.

Der Erfindung liegt die Aufgabe zugrunde, eine neue Möglichkeit der Übertragung von Messergebnissen kleinräumiger bodennaher Messverfahren, z.B. unter Verwendung von Messtürmen, auf die größere Skala der global abtastenden Fernerkundungsvorrichtungen zu finden, ohne dass für die Skalierung die globale Schwadweite verringert oder die Anforderungen an die Kameraparameter (z.B. geometrische Auflösung, Aperturgröße) extrem erhöht werden müssen.

Erfindungsgemäß wird die Aufgabe bei einer Vorrichtung zur Kopplung von kleinräumigen bodennahen Messungen unter Verwendung von Messtürmen mit hochauflösenden Fernerkundungsdaten und Skalierung auf globale Skalen unter Verwendung global abdeckender satellitengestützter Fernerkundungsinstrumente mit mindestens einer global abtastenden Kamera, die mittels einer satellitengestützten Plattform auf einem Orbit eine optische Abtastung der Erdoberfläche realisiert, dadurch gelöst, dass mindestens eine hochauflösende satellitengestützte Kamera vorhanden ist, die ein gegenüber der global abtastenden Kamera wesentlich kleineres Blickfeld zur Abbildung des 2 bis 10fachen Einflussgebietes eines Messturms und eine Auflösung im Bereich von 10 cm bis 100 m aufweist, dass die hochauflösende Kamera derart agil angeordnet ist, dass ihr Blickfeld innerhalb des Blickwinkels der globalen Kamera verschiebbar ist und das Blickfeld der globalen Kamera überstreichen kann, und dass hochauflösende Kamera und globale Kamera während eines Orbits Abbildungen unterschiedlicher geometrischer Auflösung in gleich spezifizierten Spektralbereichen erfassen, wobei die globale Kamera mindestens drei Detektorsegmente aufweist, mit denen während dieses Orbits von einem betrachteten Objektpunkt mindestens drei Aufnahmen mit unterschiedlicher Winkelgeometrie erfassbar sind.

Vorteilhaft umfasst der vom Blickfeld (FOV) der hochauflösenden Kamera überstreichbare Bereich (FOR) mindestens 90 % des Blickfeldes (FOV) in ACT-Richtung der global abdeckenden Kamera.
Die hochauflösende Kamera weist zweckmäßig eine zusätzliche ALT-Agilität zur Realisierung verschiedener Winkelgeometrien auf.
Für die Installation von globaler Kamera und die hochauflösender Kamera sind mehrere Varianten der satellitengestützten Bewegung um die Erde möglich. Dabei können die globale Kamera und die hochauflösende Kamera in einer ersten Variante auf unterschiedlichen Plattformen befestigt sein. In einer zweiten Variante sind sie auf einer gemeinsamen Plattform befestigt und in einer dritten Gestaltung sind die globale und die hochauflösende Kamera in einem gemeinsamen Instrument realisiert.

Die globale und die hochauflösende Kamera sind zweckmäßig mit angeglichen spezifizierten Spektralfiltersätzen ausgestattet. Vorzugsweise weisen die globale und die hochauflösende Kamera jedoch physikalisch (d.h. körperlich identisch) identische Spektralfilter auf. Dabei erweist es sich als besonders vorteilhaft, dass die Spektralfilter in einem gemeinsamen Filterrad integriert sind und von hochauflösender und globaler Kamera sequenziell genutzt werden.
Um die Repetitionsraten der Aufnahmen oder die Anzahl der aufnehmbaren unterschiedlichen Winkelgeometrien zu vergrößern, sind zur Realisierung der erfindungsgemäßen Fernerkundungsvorrichtung, wenn hochauflösende und globale Kameras auf unterschiedlichen Plattformen untergebracht sind, zweckmäßig mindestens drei Plattformen vorhanden.
Für den Fall, dass hochauflösende und globale Kameras auf einer gemeinsamen Plattform installiert sind, kommen vorteilhaft mindestens zwei Plattformen zum Einsatz, um die Repetitionsraten oder die Anzahl der aufnehmbaren unterschiedlichen Winkelgeometrien zu vergrößern. Dabei ist es vorteilhaft, wenn mindestens eine der Plattformen einen sonnensynchronen Orbit aufweist.
In einer weiteren Variante weist mindestens eine der Plattformen einen Winkel von ≤ 80° zwischen Äquatorial- und Orbitalebene auf.
Zweckmäßig können die globale und die hochauflösende Kamera Spektralkanäle beinhalten, aus denen der PRI ermittelbar ist. Dabei ist es vorteilhaft, wenn ein erster Kanal eine Mittenwellenlänge bei 531 nm und ein zweiter Kanal eine Mittenwellenlänge bei 570 nm aufweist. In einer zweiten zweckmäßigen Variante weist ein erster Kanal eine Mittenwellenlänge bei 531 nm und ein zweiter Kanal eine Mittenwellenlänge bei 559 nm auf.
Bei einer dritten Variante weisen die globale und die hochauflösende Kamera Spektralkanäle auf, die zur Berechnung eines photochemischen Reflexionsindexes und eines saisonalen Vegetationsindexes geeignet sind.
Bei einer vierten Gestaltungsform verfügen sowohl die globale als auch die hochauflösende Kamera jeweils über einen breitbandigen PAR-Kanal zwischen 400 nm und 700 nm, innerhalb dessen beide Kameras eine weitgehend konstante und damit wellenlängenunabhängige Photonenempfindlichkeit aufweisen.
In einer fünften Variante werden in der globalen und der hochauflösenden Kamera zweckmäßig Spektralkanäle eingerichtet, die eine im wesentlichen lückenlose Unterteilung des PAR-Spektralbereiches zwischen 400 nm und 700 nm darstellen und eine weitgehend konstante und damit wellenlängenunabhängige Photonenempfindlichkeit aufweisen.

Die Aufgabe wird weiterhin bei einem Verfahren zur Kopplung von kleinräumigen bodennahen Messungen unter Verwendung von Messtürmen, mit hochauflösenden Fernerkundungsdaten und anschließender Skalierung auf globale Skalen unter Verwendung global abtastender satellitengestützter Fernerkundungsinstrumente mit folgenden Schritten gelöst:
A) Erfassung von Fernerkundungsdaten mittels der globalen Kamera innerhalb mehrerer spektraler Kanäle, auf globaler Skala unter mehreren und dabei verschiedenen Winkelgeometrien für jeden beobachteten Bodenpunkt,
B) Erfassung von Fernerkundungsdaten mittels der hochauflösenden Kamera innerhalb der spektralen Kanäle der globalen Kamera, auf lokaler Skala unter mindestens einer Winkelgeometrie für jeden beobachteten Messturm,
C) Umrechnung der in Schritt A) erfassten Daten auf die Winkelgeometrie der in Schritt B) erfassten Daten,
D) Bildung eines für den Messturm repräsentativen virtuellen Fernerkundungsdatensatzes unter Verwendung der durch die Tower-Footprint-Funktion gegebenen Wichtungsfaktoren innerhalb des in Schritt B) erfassten Gebietes,
E) Empirische Kopplung zwischen der am Messturm erfassten physikalischen Größe und dem in Schritt D) gebildeten virtuellen Fernerkundungsdatensatz und
F) Anwendung der im vorhergehenden Schritt abgeleiteten empirischen Kopplung auf die in Schritt C) ermittelten globalen Fernerkundungsdaten einheitlicher Winkelgeometrie und somit Ableitung eines globalen Datensatzes der betrachteten physikalischen Größe.

Dabei kann Schritt F durch folgende Schrittfolge vorteilhaft verbessert werden.
F1) Anwendung der in Schritt E) abgeleiteten empirischen Kopplung auf die in Schritt B) ermittelten Fernerkundungsdaten und somit Ableitung eines hochauflösenden Datensatzes der betrachteten physikalischen Größe;
F2) Bildung eines für den Messturm repräsentativen virtuellen Datensatzes der physikalischen Messgröße unter Verwendung der durch die Tower-Footprint-Funktion gegebenen Wichtungsfaktoren und der in F1) ermittelten Daten;
F3) Vergleich des in Schritt F2) abgeleiteten virtuellen Wertes der physikalischen Messgröße mit dem tatsächlich am Messturm erfassten Wert der physikalischen Messgröße, Feststellung des Unterschiedes der beiden Werte und Wiederholung der Schritte F1) bis F3) mit einer auf diesem Unterschied basierenden neuen empirischen Kopplung, falls der Unterschied zwischen dem virtuellen und dem tatsächlichen Wert der physikalischen Messgröße am Messturm nicht ein gewähltes Abbruchkriterium unterschreitet; und
F4) Anwendung der im Schritt F1) zuletzt angewendeten empirischen Kopplung auf die im Schritt C) ermittelten globalen Fernerkundungsdaten einheitlicher Winkelgeometrie und somit Ableitung eines globalen Datensatzes der betrachteten physikalischen Größe.

Falls Daten von mehreren Messtürme verfügbar sind, werden zweckmäßig an die bisherigen Schritte A) bis F) noch die folgenden Schritte angeschlossen:
G) Wiederholung aller bisherigen Schritte für jeden Messturm und Ableitung jeweils eines globalen Datensatzes der betrachteten physikalischen Größe basierend auf den Daten jeweils eines Messturmes; und
H) Bildung eines gemeinsamen globalen Datensatzes der betrachteten physikalischen Größe durch gewichtete Mittelung der einzelnen in allen vorhergehenden Schritten abgeleiteten globalen Datensätze der betrachteten physikalischen Größe.

Dabei wird im Schritt H) die Ableitung der Wichtungen vorteilhaft mit einem ausgewählten Verfahren aus
- abstandsbezogener Ableitung der Wichtungen,
- landnutzungsbezogener Ableitung der Wichtungen,
- klimazonenbezogener/vegetationszonenbezogener Ableitung der Wichtungen oder
- messwertbezogener Ableitung der Wichtungen
oder einer Kombination aus mindestens zwei diesen Verfahren durchgeführt.

Die Erfindung basiert auf der Grundidee, dass innerhalb des Blickfeldes (FOV - Field of View) einer globalen Kamera jeder Bodenpunkt unter einer anderen Winkelgeometrie (Sonne - Bodenpunkt - Kamera) aufgenommen wird. Aufgrund der Winkelabhängigkeit der Reflexion an der Erdoberfläche (BRDF) ergibt sich ein entsprechender Fehlereinfluss auf die Übertragung. Um dieses Problem zu eliminieren, ist es notwendig, die Winkelgeometrien der einzelnen aufgenommenen Bodenpunkte anzugleichen. Zu diesem Zweck ist die Aufnahme ein und desselben Bodenpunktes unter mindestens drei verschiedenen Winkelgeometrien mittels der globalen Kamera erforderlich, wobei weitere Aufnahmen mit unterschiedlichen Winkelgeometrien vorteilhaft sind.
Das Problem der Übertragung zwischen Turm- und globalen Kameramessdaten kann dann gelöst werden, indem der Nachteil der zu geringen örtlichen Auflösung der global abdeckenden Kamera durch den zusätzlichen Einsatz einer hochauflösenden Kamera kompensiert wird. Um die Aufwände für diese hochauflösende Kamera zu limitieren, wird die Abdeckung dieser Kamera auf etwa das 2 bis 10fache des Einflussgebietes typischer Turmmessungen beschränkt. Durch diesen Größenunterschied zwischen dem Einflussgebiet und dem hochaufgelösten Abdeckungsgebiet werden die Anforderungen an die Blickrichtungsstabilität der hochauflösenden Kamera reduziert und die Abdeckung des Einflussgebietes auch bei höheren Windgeschwindigkeiten abgesichert.

Mit der Erfindung ist es möglich, Messergebnisse kleinräumiger bodennaher Messverfahren unter Verwendung von Messtürmen auf die größere Skala von global abdeckenden Fernerkundungsvorrichtungen zu übertragen, ohne dass für die Anpassung die globale Schwadweite verringert oder die Anforderungen an die Kameraparameter extrem erhöht werden müssen. Insbesondere lassen sich Eddy-Kovarianzmessung und ähnliche Verfahren auf global abtastende Messverfahren skalieren. Weitere, über die Realisierung verschiedener Blickwinkel innerhalb des ALT-FOV einer globalen Kamera hinausgehende Vorteile, können durch Einsatz der globalen Kamera auf mindestens einer Plattform erreicht werden, welche einen verringerten Winkel zwischen Äquatorial- und Orbitalebene aufweist und somit sowohl Beobachtungen unter weiteren Winkelgeometrien (Beobachtung, Sonne - Bodenpunkt - Kamera) ermöglicht als auch die Repetitionsrate in einigen vorbestimmten Gebieten erhöht.

Die Erfindung soll nachstehend anhand von Ausführungsbeispielen näher erläutert werden. Die Zeichnungen zeigen:
- Fig. 1:: eine Prinzipdarstellung der Erfindung mit globaler und hochauflösender Kamera;
- Fig.2:: Ausführungsformen der Erfindung mit unterschiedlicher Aufteilung auf Plattformen (a) bei Verwendung einer gemeinsamen Plattform für hochauflösende und globale Kamera, (b) bei Aufteilung auf unterschiedliche Plattformen und (c) bei Verwendung einer gemeinsamen Plattform und der Realisierung der hochauflösenden und der globalen Kamera innerhalb eines gemeinsamen Instrumentes;
- Fig.3:: eine Ausführung der globalen Kamera als mehrere separate Kameras mit unterschiedlichen ALT-Blickrichtungen;
- Fig. 4:: eine Ausführung der globalen Kamera als eine Pushbroom-Kamera mit großem ALT-FOV, bei der verschiedenen Detektorbereiche verschiedenen Blickrichtungen zugeordnet sind;

- Fig. 5:: eine Gestaltungsform zur Realisierung identischer Spektralfiltersätze a) in Form eines gemeinsamen Filterrades für hochauflösende und globale Kamera mit Filtersegmenten und b) eines Filterrades mit speziellen Filtern für PRI-, VI- und PAR-Messungen;
- Fig.6:: eine Darstellung unterschiedlicher Orbitparameter zur Erreichung einer erhöhten Repetitionsrate für einige vorbestimmte Gebiete auf der Erdoberfläche und einer erhöhten Anzahl der Beobachtungen mit unterschiedlichen Winkelgeometrien

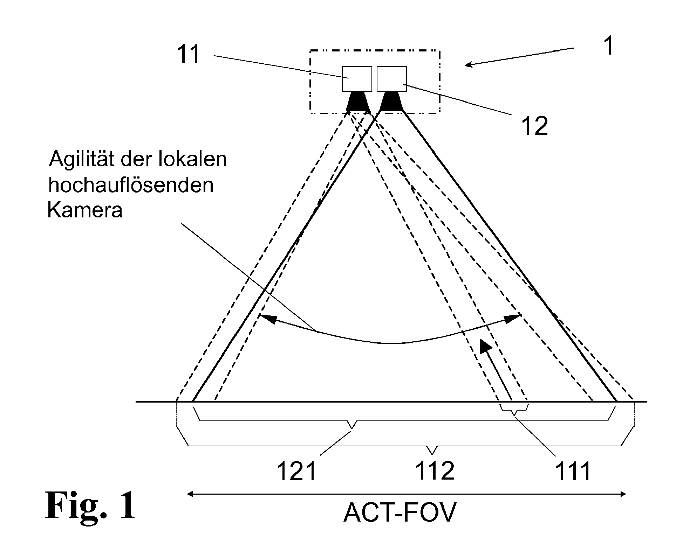

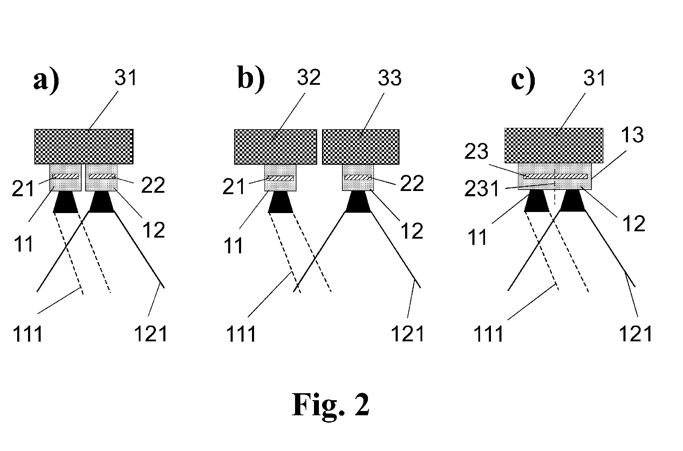

Die Fernerkundungsvorrichtung 1 zur Skalierung bodennaher kleinräumiger Messverfahren auf großräumige Skalen besteht - wie in Fig. 1 schematisch dargestellt - aus einer Kombination einer hochauflösenden Kamera 11, deren Blickfeld (Field of View -FOV 111) innerhalb des Blickfeldes (FOV 121) einer global abtastenden Kamera (kurz: globale Kamera 12) liegt und innerhalb des FOV 121 der globalen Kamera 12 beweglich ist.
Wie in Fig. 1 schematisch dargestellt, ist das FOV 111 der hochauflösenden Kamera 11 mindestens innerhalb eines ACT-Schwades der globalen Kamera 12 verschiebbar (ACT-Agilität). Dabei erfolgt die Verschiebung des FOV 111 in der Regel nicht systematisch und nicht regelmäßig über das FOV 121 der globalen Kamera 12, sondern nur nach speziellen Vorgaben bodengestützter lokaler Messwerte für konkret zugewiesene Koordinaten von Messtürmen.
Dies kann grundsätzlich auf drei unterschiedlichen Wegen erreicht werden:
- alleiniges Schwenken der hochauflösenden Kamera 11 auf einer gemeinsamen Plattform 31, auf der hochauflösende Kamera 11 und global abtastende Kamera 12 montiert sind, wie es in Fig. 2a schematisch dargestellt ist.
- Schwenken einer Plattform 32, auf der die hochauflösende Kamera 11 montiert ist, wobei in diesem Fall die globale Kamera 12 auf einer separaten zweiten Plattform 33 - gemäß der Darstellung von Fig. 2b - montiert ist.
- Bewegen mindestens einer reflektierenden Fläche (z.B. Drehen, Kippen, Schwenken eines Schwingspiegels, Kippspiegels, Polygonspiegels oder Drehspiegels; nicht gezeichnet), wobei die Bewegung zur Verlagerung des FOV 111 der hochauflösenden Kamera 11 führt. Diese Möglichkeit ist sowohl bei der Gestaltung gemäß Fig. 2a als auch bei Fig. 2c anwendbar.

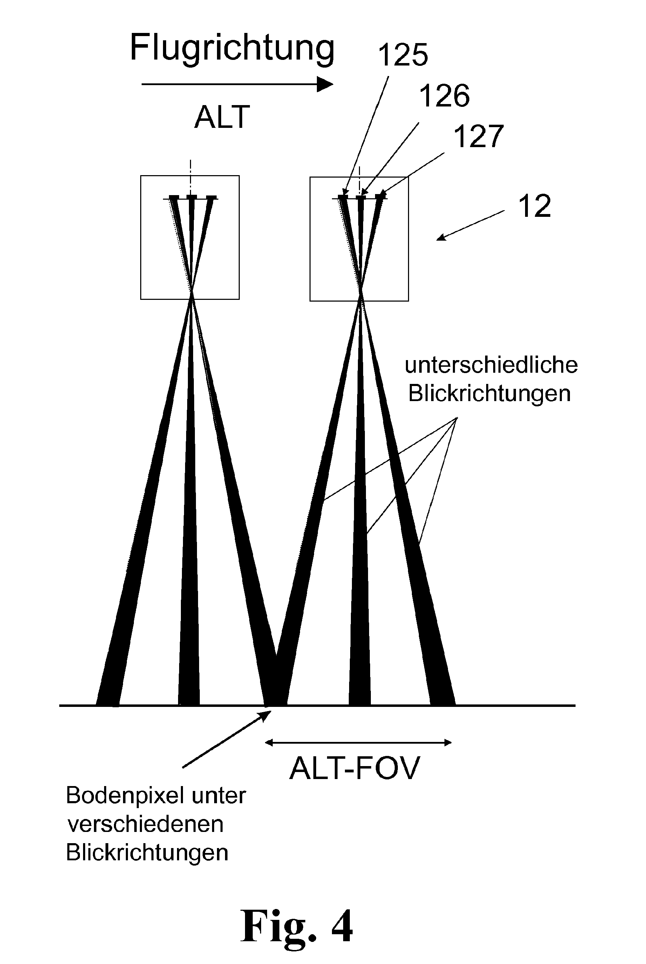

Die Ausführung gemäß Fig. 2c ist dabei eine bevorzugte Variante. Bei dieser Gestaltungsform der Erfindung sind die hochauflösende Kamera 11 und die global abdeckende Kamera 12 auf einer gemeinsamen Plattform 31 (z.B. Satellit, Flugzeug etc.) untergebracht und zusätzlich in einem gemeinsamen optischen Instrument 13 realisiert, wodurch bestimmte Komponenten gemeinsam genutzt werden.
Beide Kameras 11 und 12 basieren auf gleichartigen, idealerweise baugleichen, Matrixdetektoren. Dadurch ergibt sich eine weitgehend übereinstimmende Quanteneffizienz der Detektoren und eine vergleichbare spektrale Empfindlichkeit der beiden Kameras.
Die ACT-Agilität der hochauflösenden Kamera 11 wird durch Bewegen einer reflektierenden Fläche erreicht (nicht dargestellt).
Die Möglichkeit der globalen Kamera 12 zur Aufnahme ein und desselben Bodenpunktes unter verschiedenen Winkelgeometrien wird durch eine einzige Kameraoptik mit großem ALT-FOV sowie dem Einsatz eines großformatigen Matrixdetektors erreicht, der die in Fig.4 für einzelne Bodenpixel gezeigten Detektorbereiche 125, 126 und 127 für Vorwärtsblick (forward view; Detektorbereich 125), Nadir-Blick (nadir view; 126) und Rückwärtsblick (backward view; 127) aufweist. Die einzelnen Blickrichtungen können aber auch durch baugleiche Matrixdetektoren für jede der drei Blickrichtungen realisiert werden.
Das gemeinsame optische Instrument 13 enthält des Weiteren zur Realisierung übereinstimmender optischer Spektralkanäle für hochauflösende Kamera 11 und globale Kamera 12 ein gemeinsames Filterrad 24, das um eine zwischen beiden Kameras 11 und 12 liegende Rotationsachse 241 sequenziell unterschiedliche Filtersegmente 242 in die optischen Strahlengänge der Kameras 11 und 12 einbringt. Dadurch ist durch körperliche Identität der Spektralfilter sichergestellt, das die spektrale Separation innerhalb beider Kameras 11 und 12 in exakt gleichen Spektralkanälen erfolgt. Somit schlagen sich Alterungseffekte oder sonstige Veränderungen der Spektralfilter stets in gleichem Maße auf beide Kameras 11 und 12 nieder. Dies verringert die negativen Folgen derartiger Veränderungen der Spektralfilter deutlich.

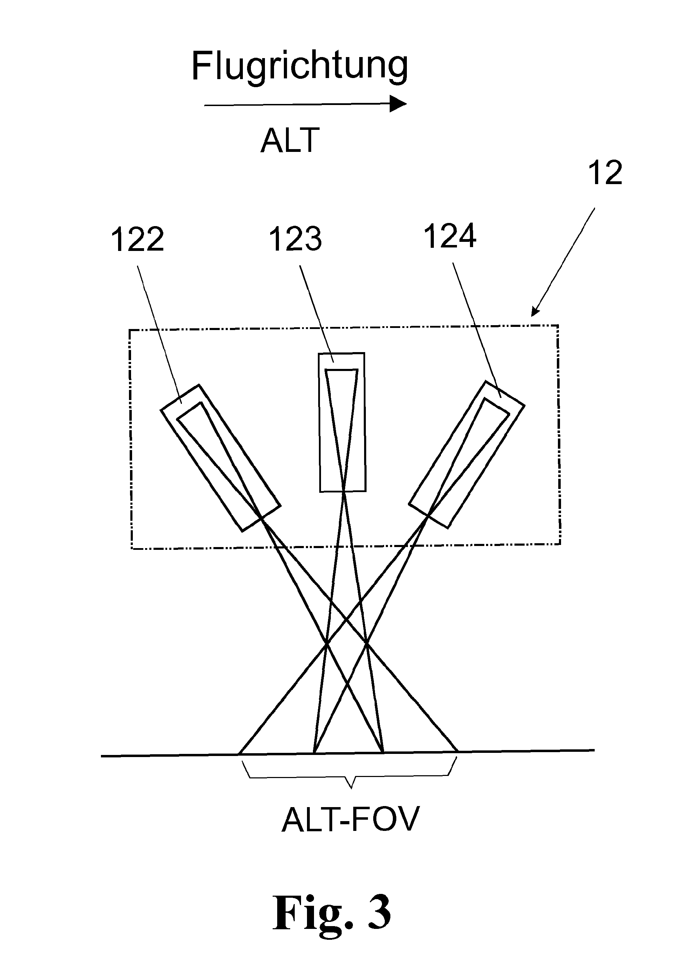

Durch die Verwendung baugleicher Detektoren und eines gemeinsamen Filterrades, verbleiben nurmehr die vorgelagerten Kameraoptiken der beiden Kameras als mögliche Ursache für unterschiedliche spektrale Gesamtempfindlichkeiten der beiden Kameras. Deshalb ist es vorteilhaft durch Wahl geeigneter optischer Materialien und geeigneter Beschichtungen dieser Materialien innerhalb der vorgelagerten Optiken eine möglichst weitgehende Übereinstimmung der spektralen Gesamtempfindlichkeiten der beiden Kameras zu anzustreben.
Um unterschiedliche Winkelgeometrien der einzelnen aufgenommenen Bodenpunkte der globalen Kamera 12 anzugleichen, sind in der globalen Kamera 12 mindestens drei verschiedenen Detektorsegmente vorhanden, die verschiedenen Winkelgeometrien zugeordnet werden können, wie weiter unten mit Bezug auf Fig. 3 und Fig. 4 noch genauer erläutert wird.

Um Beobachtungen unter solchen verschiedenen Aufnahmewinkeln zu ermöglichen, ist für die hochauflösende Kamera 11 eine zusätzliche Agilität in Flugrichtung (ALT - Along track) sinnvoll. Diese kann grundsätzlich gleichfalls auf eine der oben beschriebenen Weisen erfolgen. ACT-Agilität und ALT-Agilität können, müssen jedoch nicht, mittels desselben technischen Verfahrens realisiert werden.

Der Winkelbereich, innerhalb dessen das FOV 111 der hochauflösenden Kamera 11 verschiebbar ist (Field-of-Regard - FOR 112), entspricht dabei optimalerweise dem gesamten Blickfeld (FOV 121) der globalen Kamera 12. Prinzipiell kann das FOR 112 der hochauflösenden Kamera 11 auch größer als das FOV 121 der global abdeckenden Kamera 12 sein. Ist das FOR 112 jedoch kleiner als das FOV 121, so können im nicht abgedeckten Bereich keine Messtürme erfasst und demzufolge Daten der dort gegebenenfalls vorhandenen Messtürme nicht auf die Daten der in diesem Fall nur durch die globale Kamera 12 erfassten Gebiete interpoliert und übertragen werden.

Die Aufnahme ein und desselben Bodenpunktes unter verschiedenen Winkelgeometrien mit Hilfe der globalen Kamera 12 kann unter Nutzung eines großen FOV 121 in Flugrichtung (ALT-FOV) geschehen. Durch aufeinanderfolgende sich in Flugrichtung überlappende Aufnahmen wird dann ein und derselbe Bodenpunkt unter unterschiedlichen Winkelgeometrien aufgenommen. Hierfür bieten sich folgende Realisierungsmöglichkeiten:
- mehrere globale Kameras 122-124, die mit unterschiedlichen ALT-Blickrichtungen ausgerichtet sind, wie es in Fig. 3 für drei Kameras 122 bis 124 für Vorwärtsblick, Nadirblick und Rückwärtsblick stilisiert dargestellt ist, wobei die Kameras 122-124 als separate baugleiche Kameras ausgeführt sind, aber als einheitliche globale Kamera 12 wirken;
- eine Pushbroom-Kamera mit in ALT-Richtung erweitertem (großen) FOV 121 als globale Kamera 12, bei der verschiedene Detektorbereiche 125-127 unterschiedlichen Blickrichtungen zugeordnet sind, wie das Fig. 4 schematisch für drei ausgewählte Detektorbereiche 125, 126 und 127 zeigt. Dabei können verschiedene Detektorbereiche 125, 126, 127 usw. innerhalb einer gemeinsamen, alle Blickrichtungen umfassenden, Detektormatrix oder innerhalb kleinerer, nicht alle Blickrichtungen umfassender Detektormatrizen oder als Zeilendetektoren, die jeweils einer einzelnen Blickrichtung zugeordnet sind, realisiert werden.

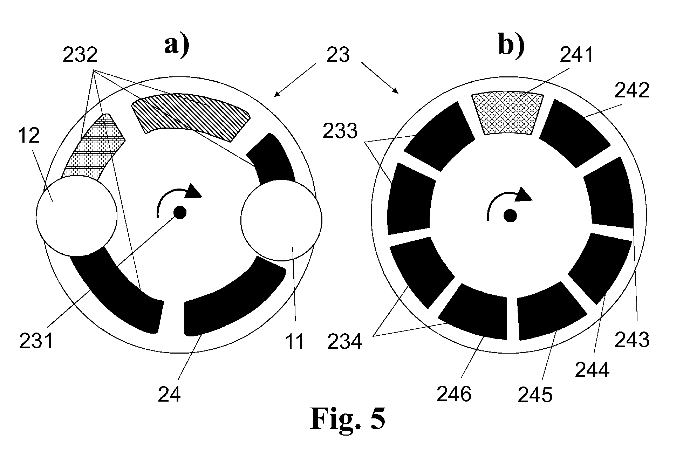

Vorteilhaft für die Übertragung der kleinräumigen bodennahen Messungen auf das durch die globale Kamera 12 erfasste Gebiet ist die gemeinsame Beobachtung mit der globalen Kamera 12 und der hochauflösenden Kamera 11 in möglichst vielen (≥3) Spektralkanälen mittels geeigneter angeglichener Spektralfiltersätze 21 und 22. Ziel des Angleichens der zu verwendenden Spektralfiltersätze 21 und 22 für die hochauflösende Kamera 11 und die globale Kamera 12 sind übereinstimmende spektrale Empfindlichkeiten der beiden Kamera 11 und 12 innerhalb der verwendeten Spektralkanäle. Hierfür gibt es folgende Realisierungsmöglichkeiten:
- Einsatz physikalisch unterschiedlicher, jedoch spektral angeglichener Filtersätze 21 und 22 innerhalb der hochauflösenden Kamera 11 und der globalen Kamera 12, wie in Fig. 2a und Fig. 2b stilisiert dargestellt;
- Verwendung eines physikalisch identischen, d.h. ein und desselben, gemeinsam für die hochauflösende Kamera 11 und die globale Kamera 12 genutzten Spektralfiltersatzes in Form eines gemeinsamen Filterrades 23, in dem ein Satz benötigter Spektralfilter als unterschiedliche Filtersegmente 232 vorhanden ist und durch Drehung um eine Rotationsachse 231 sequenziell in die optischen Strahlengänge der hochauflösenden Kamera 11 und der globalen Kamera 12 eingebracht wird, wie das in Fig. 5a stilisiert gezeichnet ist. Dabei können Filtersegmente 232 sowohl als spezielle schmalbandige Filter ausgelegt sein oder ein definiert gewähltes Breitbandfilter 24 beinhalten. Bei Verwendung eines solchen Filterrades 23 ist die zielgemäße Angleichung der spektral spezifizierten Kanäle der Kameras 11 und 12 durch Verwendung von Detektoren gleicher Bauart sowie das Einstellen ähnlicher Transmissionseigenschaften der verwendeten Optiken der hochauflösenden Kamera 11 und globalen Kamera 12 vorteilhaft und einfach zu realisieren.

Da weltraumbasierte Fernerkundungsvorhaben einen langen Zeitraum zwischen der Idee zur Fernerkundungsvorrichtung und der erfolgreichen Realisierung im Orbit erfordern, finden neue Forschungsergebnisse und Entwicklungen, die eine Neudefinition der in der Fernerkundungsvorrichtung einzusetzenden Spektralkanäle erfordern, nur mit großem Zeitversatz (~10 Jahre) Eingang in die raumfahrtbasierte Fernerkundung.
Ist die Erdfernerkundungsvorrichtung 1 gemäß Fig. 2a oder Fig. 2c auf einer gemeinsamen Plattform 31 realisiert, die zudem bemannt ist (wie z.B. die Internationale Raumstation ISS), und erfolgt die spektrale Separation mit Hilfe eines gemeinsamen Filterrades 23 (wie es in Fig. 5 dargestellt ist), so ist es zweckmäßig, dieses Filterrad 23 auswechselbar zu gestalten. Eine solche Vorrichtung kann von ihrem Befestigungspunkt abgenommen und im Innern der bemannten Raumstation das Filterrad 23 gegen ein mit einem anderen Satz von Filtersegmenten 232 (mit teilweise oder gänzlich anderen Spektralfiltern) bestückten Filterrad 23 ausgetauscht werden. An ihren ursprünglichen Befestigungspunkt erneut montiert, ist die erfindungsgemäße Vorrichtung - im Gegensatz zum heutigen Stand- dann zeitnah für neue wissenschaftliche Messaufgaben verwendbar. Des Weiteren kann sie auch im Sinne einer weltraumgestützten Experimentiervorrichtung (sog. Bread Board) unter realen Einsatzbedingungen getestet werden.
Für besondere Einsatzfälle von Vegetations- und Klimaparametern ist in Fig. 5b noch ein speziell gestaltetes Filterrad 23 gezeigt, dessen Bedeutung weiter unten noch genauer beschrieben wird.

Um sowohl die Repetitionsraten als auch die Anzahl unterschiedlicher Winkelgeometrien der Aufnahmen an einem vorgegebenen Bodenpunkt zu erhöhen, ist der Einsatz mehrerer Plattformen 31 und/oder 32 und 33 (Plattform = Satellit oder Raumstation) mit oben beschriebener Fernerkundungsvorrichtung 1 vorgesehen.
Ist die Fernerkundungsvorrichtung 1 - wie in Fig. 2a und 2c dargestellt - auf einer gemeinsamen Plattform 31 realisiert, so werden hierbei mindestens zwei Plattformen 31 verwendet.
Ist die Fernerkundungsvorrichtung 1 - wie in Fig. 2b gezeigt - auf zwei separaten Plattformen 32 und 33 verteilt realisiert (hochauflösende Kamera 11 auf Plattform 32, globale Kamera 12 auf Plattform 33), so sind in diesem Fall mindestens drei Plattformen nötig, indem entweder eine gemeinsame Plattform 31 zusammen mit separaten Plattformen 32 und 33 oder eine weitere Plattform 33 mit einer globalen Kamera 12 zum Einsatz kommt. Weitere Pattformen 31, 32 oder 33 können nach Bedarf hinzugefügt werden. Dabei dürfen sich die Anzahl von Plattformen 32 mit hochauflösender Kamera 11 und die Anzahl der Plattformen 33 mit globaler Kamera 12 unterscheiden.
Eine Erhöhung der Anzahl der die hochauflösende Kamera 11 tragenden Plattformen 32 dient primär der Erhöhung der Repetitionsrate an den zu erfassenden lokalen Gebieten (Messtürme).
Eine Erhöhung der Anzahl der die globale Kamera 12 tragenden Plattformen 33 dient neben der Erhöhung der Repetitionsrate und der gleichmäßigen zeitlichen Verteilung der wiederkehrenden Beobachtungen auch der Erhöhung der Anzahl der Beobachtungen unter verschiedenen Winkelgeometrien.

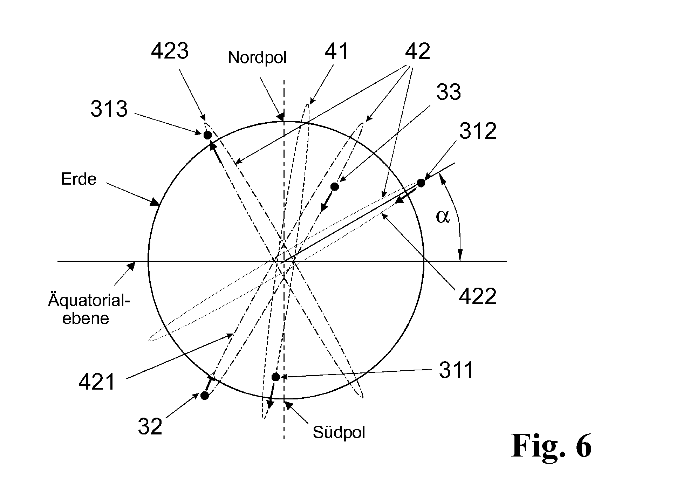

Die Orbitparameter (Winkel zwischen Äquatorial- und Orbitalebene, Flughöhe, Ortszeit des Überfluges des Äquators) von eingesetzten Plattformen 31, 32 und 33 zur Realisierung der gesamten Fernerkundungsvorrichtung 1 dürfen untereinander variieren. Durch geeignete Wahl dieser Parameter für verschiedene Orbits lassen sich Repetitionsrate und die Anzahl der Beobachtungen unter unterschiedlichen Winkelgeometrien für einen gegebenen Punkt am Boden optimieren. Eine geeignete Konfiguration von Plattformen und Orbits ist in Fig. 6 schematisch dargestellt.
Ein herkömmlicher sonnensynchroner Orbit 41 (mit Flughöhen < 2.000 km), der in Fig. 6 nahe der Nord-/Südpolachse dargestellt ist, weist die höchste Repetitionsrate an den Polen und die geringste Repetitionsrate am Äquator auf. Das bedeutet, global gesehen, eine nicht homogene Repetitionsrate. Des Weiteren werden im Fall sonnensynchroner Orbits 41 stets ähnliche Winkelgeometrien realisiert.
Durch Verringerung des Winkels α zwischen Äquatorial- und Orbitalebene einer zumindest die globale Kamera 12 tragenden Plattform 31 oder 33 innerhalb der Gesamtkonstellation von Plattformen mit erfindungsgemäßen Vorrichtungen 1 auf einen Betrag von unter 80°, werden Beobachtungen unter verschiedenen Winkelgeometrien ermöglicht. Zusätzlich erhöht sich in diesem Fall für einige Bereiche zwischen 80° nördlicher und 80° südlicher Breite die Repetitionsrate. Bei entsprechender Anzahl (2-10) der eingesetzten Plattformen 31 und/oder 32 und 33 kann durch Wahl der Orbitparameter die Repetitionsrate für festgelegte Gebiete auf der Erde und die Anzahl Winkelgeometrien dieser Beobachtungen gezielt maximiert werden. Dies ist in Fig. 6 zusammengefasst.

In diesem Beispiel sei ohne Beschränkung der Allgemeinheit die gesamte Vorrichtung 1 mittels fünf Plattformen 311, 312, 313, 32 und 33 realisiert. Drei dieser Plattformen 311-313 beinhalten sowohl die hochauflösende Kamera 11 als auch die globale Kamera 12. Die globale Kamera 12 weist dabei eine ACT-Schwadweite von > 2.200 km auf. Eine dieser Plattformen 311 bewegt sich auf einem sonnensynchronen Orbit 41. Mit Hilfe dieser sonnensynchronen Plattform 311 sind für nahezu alle Punkte der Erde täglich wiederkehrende Beobachtungen zu einer feststehenden Ortszeit möglich (feststehender lokaler Azimutwinkel der Sonne über dem beobachteten Punkt der Erdoberfläche). Des Weiteren werden mit der sonnensynchronen Plattform 31 erhöhte Repetitionsraten für die hohen Breiten (60° bis 90° nördlicher und südlicher Breite) unterstützt.
Die anderen vier Plattformen 312, 313, 32 und 33 bewegen sich auf den nicht sonnensynchronen Orbits 42, sowohl um die Repetitionsrate gezielt auch in mittleren (35° bis 60° nördlicher und südlicher Breite) und niederen Breiten (0° bis 35° nördlicher und südlicher Breite) zu erhöhen als auch um verschiedene Winkelgeometrien zu ermöglichen. Alternativ können für die zwei separaten Plattformen 32 und 33, die jeweils nur die hochauflösende Kamera 11 oder die global abtastende Kamera 12 tragen, auch eine oder zwei weitere gemeinsame Plattformen 31 mit beiden Kameras 11 und 12 eingesetzt werden.
Im gewählten Beispiel gemäß Fig.6 wird das besondere Augenmerk auf die Breitengrade zwischen 30° und 70° Breite gelegt. Deshalb werden hier auf dem Orbit 421 zwei Plattformen 32 und 33 eingesetzt, während die Plattformen 311-313 auf weiteren Orbits 422 und 423 mit unterschiedlichen Winkeln zur Äquatorebene umlaufen. Dabei ist die Plattform 313 auf einem Orbit 423 eingerichtet, dessen Orbitalebene um die Nordpol-Südpol-Achse um etwa 180° gedreht verglichen mit Orbit 421 angeordnet ist. Orbit 423 führt zusammen mit Orbit 421 im Jahresmittel zu erhöhten Repetitionsraten bei ausschließlicher Betrachtung von Perioden mit Sonneneinstrahlung am beobachteten Bodenpunkt (Tagesbeobachtungen).
Für alle nicht sonnensynchronen Orbits 42 ergeben sich stets abwechselnd Tag- und Nachtperioden der Überflüge am Beobachtungsort, da die Überflugzeit driftet.

Besonders vorteilhaft für die Übertragung von Turmmessungen auf globale Skalen ist die Verwendung spezieller Kombinationen von Spektralkanälen.
Dabei soll zumindest ein saisonaler Vegetationsindex (VI) unterstützt werden. Durch die Realisierung von Spektralkanälen, die eine Berechnung saisonaler VI ermöglichen, wird die Erfassung der grundsätzlichen Fähigkeit der Vegetation zur Photosynthese (Chlorophyllkonzentration, Pflanzenbedeckungsgrad, Blattflächenindex) ermöglicht. Welcher saisonale VI dabei durch die realisierten Spektralkanäle unterstützt wird und ob ein alleiniger oder mehrere VI durch die in den Kameras 11 und 12 der Vorrichtung 1 realisierten Spektralkanäle unterstützt werden, ist dabei von nachgeordneter Bedeutung.

Ohne Beschränkung der Allgemeinheit seien folgende Beispiele für saisonale VI aufgeführt:
- Normierter differentieller Vegetationsindex (Normalised Differential Vegetation Index)
- NDVI (G. Rees, The remote sensing data book, Cambridge University Press, 1999, ISBN 052148040 X)
- Verbesserter Vegetationsindex (Enhanced Vegetation Index) - EVI (Huete, A. R., Justice, C. and Liu, H. (1994) Development of vegetation and soil indices for MODIS-EOS. Remote Sensing of Environment, 25, pp. 295-309.)
- Rotkantenposition (Red Edge Position) (DAWSON and CURRAN: A new technique for interpolating the reflectance red edge position, Int. J. remote sensing, vol. 19, no. 11, (1998) 2133- 2139)

Des Weiteren ist die Unterstützung der zur Ermittlung des Photochemischen Reflexionsindexes (PRI) notwendigen Spektralkanäle vorgesehen. Durch zusätzliche Realisierung von Spektralkanälen, die die Berechnung des PRI ermöglichen, wird die Fähigkeit zur Beschreibung einer Quanteneffizienz (Light Use Efficiency) von Pflanzen und damit zur Beschreibung der kurzfristigen Anpassungsfähigkeit der Vegetation hinsichtlich Umwelteinflüssen (z.B. Trockenstress) realisiert.

In der Literatur wird der PRI mittels Auswertung zweier schmalbandiger Kanäle (Bandbreite ≤ 10 nm) um die Mittenwellenlängen 531 nm und 570 nm beschrieben (J.A.GAMON, J. PEÑUELAS, C.B. FIELD: A narrow-waveband spectral index that tracks diurnal changes in photosynthetic efficiency; in: Remote Sensing of Environment 41(1) (1992) 35-44).

Da die Reflexionseigenschaften in den beiden genannten Spektralkanälen stark winkelabhängig sind und zudem die Winkelabhängigkeit zwischen beiden Kanälen differiert, trifft diese Winkelabhängigkeit grundsätzlich auch für den abgeleiteten Index PRI zu. Erst durch die mit Hilfe der erfindungsgemäßen Fernerkundungsvorrichtung 1 realisierten Aufnahmen unter verschiedenen Winkelgeometrien, ist diese Winkelabhängigkeit erfassbar und beschreibbar.

Innerhalb einer zu einem gegebenen Zeitpunkt aufgenommenen Szene kann jedem Bildpunkt eine unterschiedliche Winkelgeometrie zugeordnet werden. Damit findet die Beobachtung des Einflussgebietes eines Messturmes stets unter einer anderen Winkelgeometrie statt als die Beobachtung anderer Bildpunkte. Aufgrund der Fähigkeit der hier beschriebenen Vorrichtung 1 zur Abtastung ein und desselben Bodenpunktes unter verschiedenen Winkelgeometrien wird eine aussagekräftige empirische Kopplung des PRI mit an den Messtürmen gemessenen Werten erst ermöglicht.

Die Aussagekraft des PRI hängt des Weiteren sehr stark von der exakten Realisierung des spektralen Filters um 570 nm ab (G. M. TROTTER, D. WHITEHEAD, and E. J. PINKNEY, The photochemical reflectance index as a measure of photosynthetic light use efficiency for plants with varying foliar nitrogen contents, in: Int. J. remote sensing, vol. 23, No. 6 (2002) 1207-1212).

In Folge dessen wirkt sich jede potentielle zeitliche Veränderung der spektralen Empfindlichkeit der Kameras 11 und 12 sowie insbesondere eine Variation der Eigenschaften der Spektralfilter 21, 22 oder 23 im Falle satellitengestützter Erdbeobachtung nachteilig aus.

Um das damit verbundene Ausfallrisiko der Kameras 11 und 12 bezüglich dieser speziellen Anwendung zu minimieren, ist die ersatzweise Realisierung eines schmalbandigen Kanals um die Mittenwellenlänge von 559 nm innerhalb der hochauflösenden Kamera 11 und der global abdeckenden Kamera 12 vorteilhaft. Damit wird annähernd dieselbe Aussagegüte des PRI erreicht - bei gleichzeitig höherer Toleranz gegenüber zeitlicher Variationen der Eigenschaften des eingesetzten Spektralfilters aufgrund der größeren Breite der spektralen Absorptionseigenschaft des Xantophylls in diesem Wellenlängenbereich.

Folgende Kanaldefinitionen seien im Sinne von Ausführungsbeispielen für den PRI aufgeführt:
- Kanal 1: Mittenwellenlänge (531 ± 5) nm, Bandbreite 1 ... 15 nm,
   Kanal 2: Mittenwellenlänge (570 ± 1) nm, Bandbreite 1 ... 10 nm;
- Kanal 1: Mittenwellenlänge (531 ± 5) nm, Bandbreite 1 ... 15 nm,
   Kanal 2: Mittenwellenlänge (559 ± 3) nm, Bandbreite 1 ... 15 nm.

Zur empirischen Beschreibung der Gesamtprimärproduktion (gross primary production - GPP) wird zusätzlich zum saisonalen VI und zum PRI die photosynthetisch aktive Strahlung (PAR) benötigt (A. F. RAHMAN, et al., Modeling CO2 flux of boreal forests using narrow-band indices from AVIRIS imagery, AVIRIS Workshop 2000, JPL/NASA, Kalifornien (US)). Momentan wird letztere mit Hilfe von Strahlungstransfermodellen unter Verwendung der in heutigen Instrumenten verfügbaren Kanälen näherungsweise bestimmt (N. GOBRON, B. PINTY, M. M. VERSTRAETE, and Y. GOVAERTS: The MERIS Global Vegetation Index (MGVI). Description and preliminary application; in: Int. J. Remote Sens. 20 (1999), 1917-1927).

Im Rahmen der derzeit existierenden Methoden ergibt sich somit die Notwendigkeit zur modellgestützten Interpolation zwischen den momentan auf Fernerkundungsplattformen verfügbaren Kanälen innerhalb des PAR-beschreibenden Wellenlängenbereiches zwischen 400 nm und 700 nm.

Eine Verbesserung der Bestimmung der Gesamtprimärproduktion wird durch Einführung eines breitbandigen Kanals im visuellen Spektralbereich erreicht. Dieser, zusätzlich zu den Kanälen zur Ableitung von saisonalem VI und PRI eingefügte Kanal, dient einer, im Vergleich zum diesbezüglichen Stand der Technik (GOBRON et al.: The MERIS global vegetation index... a.a.O), verbesserten Ableitung des Betrages der absorbierten photosynthetisch aktiven Strahlung (photosynthetic active radiation - PAR). Eine solche Konfiguration ist in Fig. 5a für den Filtersatz eines Filterrades 23 gezeigt.

Der breitbandige Kanal ist durch das Breitbandfilter 24 bezeichnet und in gleicher Weise ausformt wie die übrigen vier Filtersegmente 232, von denen zwei den PRI- und zwei den VI-Messungen zugeordnet sind.
Der Durchlassbereich des breitbandigen Kanals reicht von 400 nm bis 700 nm. Durch ein spezielles Breitbandfilter 24 wird sichergestellt, dass die photonenbezogene Empfindlichkeit der Kameras 11 und 12 innerhalb dieses Durchlassbereiches weitgehend konstant und damit wellenlängenunabhängig ist (Abweichung maximal 5 %). Unter Verwendung eines saisonalen VI kann eine Abgrenzung zu den Reflexionsanteilen von Flächen ohne photosynthetische Aktivität erreicht werden. Der breitbandige Kanal liefert somit sog. PAR-Messwerte.

Als nachteilig an der Einführung eines durchgängigen breitbandigen Kanals zwischen 400 nm und 700 nm verbleibt allerdings die Nichtberücksichtigung der wellenlängenabhängigen Winkelabhängigkeit der Reflexion ein und desselben Bodenpunktes. Deswegen kann eine weitere Verbesserung der Beschreibung der GPP durch die möglichst lückenlose Unterteilung des oben beschriebenen PAR-Kanals in mehrere Einzelkanäle erfolgen, wobei die Kameras 11 und 12 innerhalb jedes dieser Einzelkanäle eine weitgehend konstante und damit wellenlängenunabhängige photonenbezogene Empfindlichkeit aufweisen.

Eine derart angelegte Ausführungsform des Filterrades 23 ist in Fig. 5b gezeigt. In dieser Darstellung wurden aus Übersichtlichkeitsgründen gegenüber Fig. 5a die Kameras 11 und 12, die das Filterrad 23 gemeinsam nutzen, nicht eingezeichnet. Das Filterrad 23 weist in diesem Fall neun Filtersegmente auf, von denen zwei Segmente als PRI-Filter 233 ausgelegt sind (siehe obige Kanaldefinitionen) und zwei weitere Segmente als VI-Filter 234 eingesetzt sind. Des Weiteren sind anstelle eines Breitbandfilters 24 (gemäß Fig. 5a) sechs spektral abgestufte PAR-Filter 241-246 angeordnet, die den vorgegebenen PAR-Spektralbereich von 400 -700 nm lückenlos abdecken.

Es soll angenommen werden, dass die einzelnen PAR-Filter jeweils genau einen Bereich von 50 nm stufenweise abdecken (geringe Überlappungen sind aber zulässig). Dadurch kann das PAR-Filter 246, das den Bereich 650-700 nm transmittiert, zugleich für das zweite VI-Filter 234 benutzt werden, wodurch ein optischer Kanal eingespart werden kann.

Ohne Beschränkung der Allgemeinheit sei im Folgenden bei der Scalierung von Vegetations- und Klimaparametern unter physikalischen Größen folgendes verstanden:
- CO₂-Fluss;
- fühlbarer (sensibler) Wärmefluss;
- latenter Wärmefluss;
- Anteil der durch Pflanzen absorbierten PAR;
- Blattflächenindex (leaf area index - LAI).

Unter Verwendung der beschriebenen Vorrichtung 1 gestaltet sich das Verfahren für die Skalierung von physikalischen Größen mit Hilfe von winkelgeometrieabhängigen Fernerkundungsdaten und Daten der Messtürme wie folgt:
1) Erfassung von Fernerkundungsdaten mittels der globalen Kamera innerhalb mehrerer spektraler Kanäle, auf globaler Skala unter mehreren und dabei verschiedenen Winkelgeometrien für jeden beobachteten Bodenpunkt;
2) Erfassung von Fernerkundungsdaten mittels der hochauflösenden Kamera innerhalb der spektralen Kanäle der globalen Kamera, auf lokaler Skala unter mindestens einer Winkelgeometrie für jeden beobachteten Messturm;
3) Umrechnung der in 1) erfassten Daten auf die Winkelgeometrie der in 2) erfassten Daten;
4) Bildung eines für den Messturm repräsentativen virtuellen Fernerkundungsdatensatzes unter Verwendung der durch die Tower-Footprint-Funktion gegebenen Wichtungsfaktoren innerhalb des in 2) erfassten Gebietes;
5) Empirische Kopplung zwischen der am Messturm erfassten physikalischen Größe und dem in 4) gebildeten virtuellen Fernerkundungsdatensatz;
6) Anwendung der im vorhergehenden Schritt abgeleiteten empirischen Kopplung auf die in Schritt 3) ermittelten globalen Fernerkundungsdaten einheitlicher Winkelgeometrie und somit Ableitung eines globalen Datensatzes der betrachteten physikalischen Größe;
7) Im Falle der Verfügbarkeit von Daten mehrerer Messtürme, Wiederholung aller bisherigen Schritte für jeden Messturm. Ableitung jeweils eines globalen Datensatzes der betrachteten physikalischen Größe basierend auf den Daten jeweils eines Messturmes;
8) Bildung eines gemeinsamen globalen Datensatzes der betrachteten physikalischen Größe durch gewichtete Mittelwertbildung unter Verwendung der einzelnen in allen vorhergehenden Schritten abgeleiteten globalen Datensätze der betrachteten physikalischen Größe.

Die gewichtete Mittelwertbildung kann dabei grundsätzlich auf unterschiedlichem Wege erfolgen und sich in Abhängigkeit von der betrachteten physikalischen Größe ändern. Vor diesem Hintergrund sind - ohne Beschränkung der Allgemeinheit - folgende Klassen von Wichtungsverfahren oder deren Kombinationen möglich:
- abstandsbezogene Ermittlung der Wichtungen;
- landnutzungsbezogene Ermittlung der Wichtungen;
- klimazonenbezogene/vegetationszonenbezogene Ermittlung der Wichtungen und
- messwertbezogene Ermittlung der Wichtungen.

Ein verbleibender negativer Einfluss von potentiellen Nichtlinearitäten auf die Anwendung der auf Schritt 4) basierenden und in Schritt 6) gewonnenen empirischen Kopplung kann durch folgende für Schritt 6) abweichend eingefügte Schrittfolge 6a-6d) vermieden werden:
6a) Anwendung der in 5) abgeleiteten empirischen Kopplung auf die in 2) ermittelten Fernerkundungsdaten und somit Ableitung eines hochauflösenden Datensatzes der betrachteten physikalischen Größe;
6b) Bildung eines für den Messturm repräsentativen virtuellen Datensatzes der physikalischen Messgröße unter Verwendung der durch die Tower-Footprint-Funktion gegebenen Wichtungsfaktoren und der in 6a) ermittelten Daten;
6c) Vergleich des in 6b) abgeleiteten virtuellen Wertes der physikalischen Messgröße mit dem tatsächlich am Messturm erfassten Wert der physikalischen Messgröße. Erfüllt die Übereinstimmung zwischen den beiden Werten für die physikalische Messgröße am Turm nicht ein gewähltes Abbruchkriterium wird basierend auf diesem Unterschied eine neue empirische Kopplung bestimmt und die Schritte 6a) bis 6c) wiederholt;
6d) Anwendung der in 6a) zuletzt angewendeten empirischen Kopplung auf die in 3) ermittelten globalen Fernerkundungsdaten einheitlicher Winkelgeometrie und somit Ableitung eines globalen Datensatzes der betrachteten physikalischen Größe; und Fortsetzung des Verfahrens mit Schritt 7) und 8).

### Bezugszeichenliste

- 1: Fernerkundungsvorrichtung
- 11: hochauflösende Kamera
- 111: FOV (Blickfeld - Field of View)
- 112: FOR (Bezugsfeld - Field of Regard)
- 12: globale Kamera
- 121: FOV (Blickfeld - Field of View)
- 122-124: Kameras (für unterschiedliche ACT-Blickrichtungen)
- 125-127: Detektorbereiche (für unterschiedliche ACT-Blickrichtungen)
- 13: gemeinsames Instrument (aus hochauflösender und globaler Kamera)

- 21, 22: spektral angeglichene (separate) Filtersätze
- 23: gemeinsames Filterrad
- 231: Rotationsachse
- 232: Filtersegmente
- 233: PRI-Filter
- 234: VI-Filter
- 24: Breitbandfilter (für PAR-Messung)
- 241-246: PAR-Filter (lückenlose Bandfilter für PAR-Messung)

- 31: gemeinsamen Plattform
- 311-313: Plattformen (auf unterschiedlichen Orbits)
- 32, 33: separate Plattformen (für hochauflösende und globale Kamera)

- 41: sonnensynchroner Orbit
- 42: nicht sonnensynchrone Orbits
- 421-423: Orbits (unter unterschiedlichen Winkeln)

- α: Winkel (zwischen Äquatorial- und Orbitalebene)

## Patentansprüche

1. Vorrichtung zur Kopplung von kleinräumigen bodennahen Messungen unter Verwendung von Messtürmen mit hochauflösenden Fernerkundungsdaten und Skalierung auf globale Skalen unter Verwendung global abdeckender satellitengestützter Fernerkundungsinstrumente mit mindestens einer global abtastenden Kamera (12), die mittels einer satellitengestützten Plattform (33) auf einem Orbit (41) eine optische Abtastung der Erdoberfläche realisiert, **dadurch gekennzeichnet, dass**
mindestens eine hochauflösende Kamera (11) vorhanden ist, die ein gegenüber der globalen Kamera (12) wesentlich kleineres Blickfeld zur Abbildung des 2 bis 10fachen Einflussgebietes eines Messturms und eine Auflösung im Bereich von 10 cm bis 100 m aufweist,
die hochauflösende Kamera (11) derart agil angeordnet ist, dass ihr Blickfeld innerhalb des Blickwinkels der globalen Kamera (12) verschiebbar ist und das Blickfeld der globalen Kamera (12) überstreichen kann,
hochauflösende Kamera (11) und globale Kamera (12) während eines Orbits (41; 42) Abbildungen unterschiedlicher geometrischer Auflösung in gleich spezifizierten Spektralbereichen erfassen, wobei die globale Kamera (12) mindestens drei Detektorsegmente (122-124; 125-127) aufweist, mit denen während eines Orbits (41; 42) von einem betrachteten Objektpunkt mindestens drei Aufnahmen mit unterschiedlicher Winkelgeometrie erfassbar sind.

2. Vorrichtung nach Anspruch 1, **dadurch gekennzeichnet, dass** der vom Blickfeld (111) der hochauflösenden Kamera (11) überstreichbare Bereich (112) mindestens 90 % des Blickfeldes (121) in ACT-Richtung der global abdeckenden Kamera (12) umfasst.

3. Vorrichtung nach Anspruch 1, **dadurch gekennzeichnet, dass** die hochauflösende Kamera (11) eine zusätzliche ALT-Agilität zur Realisierung verschiedener Winkelgeometrien aufweist

4. Vorrichtung nach Anspruch 1, **dadurch gekennzeichnet, dass** die globale Kamera (12) und die hochauflösende Kamera (11) auf unterschiedlichen Plattformen (32, 33) befestigt sind.

5. Vorrichtung nach Anspruch 1, **dadurch gekennzeichnet, dass** die globale Kamera (12) und die hochauflösende Kamera (11) auf einer gemeinsamen Plattform (31) oder in einem gemeinsamen Instrument (13) befestigt sind.

6. Vorrichtung nach Anspruch 1, **dadurch gekennzeichnet, dass** die globale Kamera (12) und die hochauflösende Kamera (11) angeglichene Spektralfiltersätze (21, 22) oder physikalisch identische Spektralfilter aufweisen.

7. Vorrichtung nach Anspruch 6, **dadurch gekennzeichnet, dass** die Spektralfilter in einem gemeinsamen Filterrad (23) integriert sind.

8. Vorrichtung nach Anspruch 4 oder 5, **dadurch gekennzeichnet, dass** mindestens zwei Plattformen (31; 32, 33) vorhanden sind, um die Repetitionsraten oder die Anzahl der aufnehmbaren unterschiedlichen Winkelgeometrien zu vergrößern.

9. Vorrichtung nach Anspruch 4, 5 oder 8, **dadurch gekennzeichnet, dass** mindestens eine der Plattformen (31; 32, 33) einen sonnensynchronen Orbit (41) aufweist.

10. Vorrichtung nach Anspruch 4, 5 oder 8, **dadurch gekennzeichnet, dass** mindestens eine der Plattformen (31; 32, 33) einen Winkel (α) von ≤80° zwischen Äquatorial-und Orbitalebene aufweist.

11. Vorrichtung nach Anspruch 1, **dadurch gekennzeichnet, dass** die globale Kamera (12) und die hochauflösende Kamera (11) Spektralkanäle aufweisen, die zur Berechnung eines photochemischen Reflexionsindexes (PRI) und eines saisonalen Vegetationsindexes (VI) geeignet sind.

12. Vorrichtung nach Anspruch 1, **dadurch gekennzeichnet, dass** die globale Kamera (12) und die hochauflösende Kamera (11) jeweils einen breitbandigen PAR-Kanal zwischen 400 nm und 700 nm aufweisen, innerhalb dessen beide Kameras (11, 12) eine weitgehend konstante und damit wellenlängenunabhängige Photonenempfindlichkeit aufweisen.

13. Vorrichtung nach Anspruch 1, **dadurch gekennzeichnet, dass** die globale Kamera (12) und die hochauflösende Kamera (11) Spektralkanäle aufweisen, die eine im wesentlichen lückenlose Unterteilung des Spektralbereiches zwischen 400 nm und 700 nm darstellen, wobei beide Kameras (11, 12) innerhalb jeder dieser Einzelkanäle (241-246) eine weitgehend konstante und damit wellenlängenunabhängige photonenbezogene Empfindlichkeit aufweisen.

14. Verfahren zur Kopplung von kleinräumigen bodennahen Messungen unter Verwendung von Messtürmen, mit hochauflösenden Fernerkundungsdaten und anschließender Skalierung auf globale Skalen unter Verwendung global abtastender satellitengestützter Fernerkundungsinstrumente mit folgenden Schritten:
A) Erfassung von Fernerkundungsdaten mittels der globalen Kamera innerhalb mehrerer spektraler Kanäle, auf globaler Skala unter mehreren und dabei verschiedenen Winkelgeometrien für jeden beobachteten Bodenpunkt;
B) Erfassung von Fernerkundungsdaten mittels der hochauflösenden Kamera innerhalb der spektralen Kanäle der globalen Kamera, auf lokaler Skala unter mindestens einer Winkelgeometrie für jeden beobachteten Messturm;
C) Umrechnung der in Schritt A) erfassten Daten auf die Winkelgeometrie der in Schritt B) erfassten Daten;
D) Bildung eines für den Messturm repräsentativen virtuellen Fernerkundungsdatensatzes unter Verwendung der durch die Tower-Footprint-Funktion gegebenen Wichtungsfaktoren innerhalb des in Schritt B) erfassten Gebietes;
E) Empirische Kopplung zwischen der am Messturm erfassten physikalischen Größe und dem in Schritt D) gebildeten virtuellen Fernerkundungsdatensatz;
F) Anwendung der im vorhergehenden Schritt abgeleiteten empirischen Kopplung auf die in Schritt C) ermittelten globalen Fernerkundungsdaten einheitlicher Winkelgeometrie und somit Ableitung eines globalen Datensatzes der betrachteten physikalischen Größe.

15. Verfahren nach Anspruch 14, wobei in Schritt F folgende Schrittfolge abläuft:
F1) Anwendung der in Schritt E) abgeleiteten empirischen Kopplung auf die in Schritt B) ermittelten Fernerkundungsdaten und somit Ableitung eines hochauflösenden Datensatzes der betrachteten physikalischen Größe;
F2) Bildung eines für den Messturm repräsentativen virtuellen Datensatzes der physikalischen Messgröße unter Verwendung der durch die Tower-Footprint-Funktion gegebenen Wichtungsfaktoren und der in F1) ermittelten Daten;
F3) Vergleich des in Schritt F2) abgeleiteten virtuellen Wertes der physikalischen Messgröße mit dem tatsächlich am Messturm erfassten Wert der physikalischen Messgröße, Feststellung des Unterschiedes der beiden Werte und Wiederholung der Schritte F1) bis F3) mit einer auf diesem Unterschied basierenden neuen empirischen Kopplung, falls der Unterschied zwischen dem virtuellen und dem tatsächlichen Wert der physikalischen Messgröße am Messturm nicht ein gewähltes Abbruchkriterium unterschreitet; und
F4) Anwendung der im Schritt F1) zuletzt angewendeten empirischen Kopplung auf die im Schritt C) ermittelten globalen Fernerkundungsdaten einheitlicher Winkelgeometrie und somit Ableitung eines globalen Datensatzes der betrachteten physikalischen Größe.

16. Verfahren nach Anspruch 14 oder 15, wobei im Falle der Verfügbarkeit von Daten mehrerer Messtürme nachfolgende Schritte angeschlossen werden:
G) Wiederholung aller bisherigen Schritte für jeden Messturm und Ableitung jeweils eines globalen Datensatzes der betrachteten physikalischen Größe basierend auf den Daten jeweils eines Messturmes; und
H) Bildung eines gemeinsamen globalen Datensatzes der betrachteten physikalischen Größe durch gewichtete Mittelung der einzelnen in allen vorhergehenden Schritten abgeleiteten globalen Datensätze der betrachteten physikalischen Größe.

17. Verfahren nach Anspruch 16, wobei im Schritt H) die Ableitung der Wichtungen mit mindestens einem Verfahren aus den Klassen
- abstandsbezogene Ableitung der Wichtungen;
- landnutzungsbezogene Ableitung der Wichtungen;
- klimazonenbezogene/vegetationszonenbezogene Ableitung der Wichtungen;
- messwertbezogene Ableitung der Wichtungen
durchgeführt wird
